# EUROPÄISCHE PATENTSCHRIFT

(11) **EP 3 215 341 B1**
(45) Veröffentlichungstag und Bekanntmachung des Hinweises auf die Patenterteilung: **20.11.2019**
(21) Anmeldenummer: 16778268.9
(22) Anmeldetag: 27.09.2016
(51) Int. Cl.: B29B 9/16, B29B 17/00, B29C 44/34, B29C 44/60, B29B 9/06, B26D 1/29

(54) **VERFAHREN UND VORRICHTUNG ZUM HERSTELLEN EINES ALS WERKSTOFF FÜR EINE WÄRMEDÄMMSCHÜTTUNG VORGESEHENES POLYSTYROL-GRANULAT**
METHOD AND DEVICE FOR PRODUCING A POLYSTYRENE GRANULAR MATERIAL INTENDED AS A MATERIAL FOR A THERMAL INSULATION BULK GOOD
PROCÉDÉ ET DISPOSITIF DE PRODUCTION DE GRANULES DE POLYSTYRÈNE PRÉVUS COMME MATÉRIAU DE REMBLAI CALORIFUGE

(30) Priorität: 16.10.2015 DE 102015220203
(43) Veröffentlichungstag der Anmeldung: 13.09.2017
(73) Patentinhaber: Edler, Alois, 4572 St. Pankraz (AT)
(72) Erfinder: Edler, Alois, 4572 St. Pankraz (AT)
(74) Vertreter: Funk, Alexander Tobias
(86) Internationale Anmeldenummer: PCT/EP2016/072979
(87) Internationale Veröffentlichungsnummer: WO 2017/063870

(56) Entgegenhaltungen:
- WO-A1-96/39365
- DE-A1- 19 756 264
- US-A1- 2006 211 780
- US-A1- 2008 249 199
- US-A1- 2010 006 003
- US-A1- 2011 009 508
- US-A1- 2012 214 885

## Beschreibung

Die Erfindung betrifft ein Verfahren und eine Vorrichtung zum Herstellen eines als Werkstoff für eine Wärmedämmschüttung vorgesehenen Polystyrol-Granulats.

Eine Wärmedämmschüttung umfasst in der Regel ein Granulat, also mehrere, relativ kleine, feste Partikel wie Körner oder Kugeln, die zur Wärme- und/oder Schalldämmung in Hohlräume, beispielsweise Decken, Dächer, Fußböden und Wände, geschüttet werden.

Eine Wärmedämmschüttung kann z.B. ein Granulat aufweisen, das aus zerkleinertem, insbesondere geschreddertem EPS (expandiertes Polystyrol) Abfall hergestellt wurde. Dazu wird z.B. Polystyrol-Abfall, insbesondere Bau- und Verpackungspolystyrol-Platten, gesammelt. Da dieser Abfall nicht nur expandiertes Polystyrol, sondern z.B. auch extrudiertes Polystyrol (XPS) umfasst, muss vor dem Zerkleinern der Abfall getrennt werden.

Die DE 197 56 264 A1 offenbart ein Verfahren zur Herstellung eines aufgeschäumten Granulats, bei dem in einem Extruder ein thermoplastischer Kunststoff eingegeben und der Kunststoff aufgeschmolzen und über eine oder mehrere Einspritzdüsen ein Treibmittel unter Druck zugeführt wird. Die mit dem Treibmittel angereicherte Schmelze tritt über eine am Extruderaustritt angeordnete Lochplatte aufschäumend aus und wird von einer hinter der Lochplatte angeordneten Schneideinrichtung granuliert.

Die US 2011 000 95 08 A1 offenbart eine Vorrichtung zum Herstellen eines als Werkstof für eine Wärmedämmschüttung vorgesehenes Granulat.

Die Aufgabe der vorliegenden Erfindung ist es, ein kostengünstigeres Verfahren und eine entsprechende Vorrichtung zum Herstellen eines Polystyrol-Granulats anzugeben, das als Werkstoff für eine Wärmedämmschüttung vorgesehen ist.

Die Aufgabe der Erfindung wird gelöst durch ein Verfahren zum Herstellen eines als Werkstoff für eine Wärmedämmschüttung vorgesehenen Polystyrol-Granulats, aufweisend folgende Verfahrensschritte:
- Bereitstellen von zerkleinertem Polystyrol-Abfall, der sowohl expandiertes Polystyrol als auch extrudiertes Polystyrol aufweist,
- Herstellen eines Extrudats aus dem zerkleinerten Polystyrol-Abfall mittels eines Extruders,
- Herstellen eines mit einem Treibmittel versehenen Extrudats aus dem Extrudat mittels des Extruders insbesondere gesteuert durch die elektronische Steuervorrichtung,
- Pressen des mit dem Treibmittel versehenen Extrudats durch wenigstens eine Öffnung eines Werkzeugs des Extruders,
- Abschneiden von unterschiedlich langen Stücken des durch die wenigstens eine Öffnung gepressten und mit dem Treibmittel versehenen Extrudats mittels einer Schneidevorrichtung des Werkzeugs, sodass sich die Größen wenigstens zweier der mehreren aufgeschäumten extrudierten Polystyrol-Partikel des Granulats wesentlich unterscheiden, und
- Aufschäumenlassen und mittels einer Kühlvorrichtung Kühlen der abgeschnittenen Stücke des mit dem Treibmittel versehenen Extrudats aufgrund des Treibmittels, um ein als Werkstoff für eine Wärmedämmschüttung vorgesehenes Granulat zu erhalten, das die mehreren aufgeschäumten extrudierten Polystyrol-Partikel aufweist.

Die Aufgabe der Erfindung wird auch gelöst durch eine Vorrichtung zum Herstellen eines als Werkstoff für eine Wärmedämmschüttung vorgesehenen Granulats aus einem aufgeschäumten extrudierten Polystyrol, aufweisend

- einen Extruder mit einem Werkzeug, das eine Schneidevorrichtung und wenigstens eine Öffnung aufweist, durch die der Extruder ein hergestelltes und mit einem Treibmittel versehenes Extrudat zu pressen vermag, wobei die Schneidevorrichtung eingerichtet ist, Stücke des durch die wenigstens eine Öffnung gepresste und mit dem Treibmittel versehene Extrudats abzuschneiden und das Werkzeug derart ausgebildet ist, dass es unterschiedlich lange Stücke des durch die wenigstens einen Öffnung gepressten und mit dem Treibmittel versehenen Extrudats abzuschneiden vermag, sodass sich die Größen wenigstens zweier der mehreren aufgeschäumten extrudierten Polystyrol-Partikel des Granulats wesentlich unterscheiden,
- eine dem Extruder nachfolgende Kühlvorrichtung, und
- und eine den Extruder ansteuernde elektronische Steuervorrichtung, die eingerichtet ist, das erfindungsgemäße Verfahren durchzuführen.

Gemäß dem erfindungsgemäßen Verfahren wird somit das Granulat hergestellt. Das Granulat umfasst die mehreren aufgeschäumten extrudierten Polystyrol-Partikel, die als Werkstoff für eine Wärmedämmschüttung, insbesondere für eine hydraulisch abbindende bzw. aushärtende Wärmedämmschüttung verwendet werden.

Das Ausgangsmaterial für das Granulat ist der zerkleinerte Polystyrol-Abfall. Der zerkleinerte Polystyrol-Abfall wird z.B. in einem ersten Vorratsbehälter, den die erfindungsgemäße Vorrichtung zum Herstellen des Granulats aufweisen kann, bereitgestellt.

Um den zerkleinerten Polystyrol-Abfall zu erhalten, kann die Vorrichtung zum Herstellen des Granulats eine Zerkleinerungsvorrichtung aufweisen, welche eingerichtet ist, insbesondere einen verpressten Polystyrol-Abfall zu zerkleinern. Die Zerkleinerungsvorrichtung ist beispielsweise eine Fräse und wird im Betrieb von der Steuervorrichtung angesteuert.

Der verpresste Polystyrol-Abfall ist vorzugsweise würfelförmig verpresst und umfasst sowohl expandiertes Polystyrol als auch extrudiertes Polystyrol. Vorzugsweise werden verschiedene Arten von Polystyrol-Abfall gleichmäßig vermischt und dem Extruder zugeführt.

Der verpresste Polystyrol-Abfall kann z.B. bei entsprechend eingerichteten Sammelstellen aus Polystyrol-Abfall durch Verpressen hergestellt werden, um an den Aufstellort der erfindungsgemäßen Vorrichtung zum Herstellen des Granulats z.B. mittels LKWs transportiert zu werden.

Der würfelförmige Polystyrol-Abfall kann durch Abschaben in kleinere Stücke zerkleinert werden.

Erfindungsgemäß wird mittels des Extruders das Extrudat hergestellt, indem insbesondere der zerkleinerte Polystyrol-Abfall mit wenigstens einer Heizvorrichtung des Extruders erwärmt wird.

Der Extruder ist vorzugsweise ein Einwellenextruder, dessen Heizvorrichtung mehrere hintereinander angeordnete Heizzonen für das Erwärmen des zerkleinerten Polystyrol-Abfall aufweist. Vorzugswiese umfasst der Extruder bzw. dessen Heizvorrichtung drei bis vier Heizzonen.

Das Extrudat wird anschließend mit einem Treibmittel versehen. Das Treibmittel umfasst z.B. C0₂ und/oder Kohlensäure oder besteht aus C0₂ oder aus Kohlensäure.

Vorzugsweise wird das Treibmittel im Bereich der letzten oder vorletzten Heizzone zugeführt.

Das mit dem Treibmittel versehene Extrudat wird anschließend durch die wenigstens eine Öffnung des Werkzeugs gepresst. Dadurch entsteht insbesondere wenigsten ein Strang aus dem mit dem Treibmittel versehenen Extrudat.

Das Werkzeug ist vorzugsweise ein Granulierkopf und umfasst die Schneidevorrichtung, sodass die Schneidevorrichtung das durch die wenigstens eine Öffnung gepresste, mit dem Treibmittel versehene Extrudat in Stücke zu schneiden vermag.

Diese Stücke schäumen aufgrund des Treibmittels automatisch auf und werden z.B. mit der Kühlvorrichtung gekühlt. Dadurch entstehen die einzelnen aufgeschäumten extrudierten Polystyrol-Partikel.

Vorzugsweise wird das Extrudat im Werkzeug in siebartige Formen durchgepresst, danach auf die richtige Temperatur abgekühlt und nach einer bestimmten Länge z.B. mittels Rotiermesser abgeschnitten. Durch das Treibmittel quellen die abgeschnitten Stücke zur Kugelform auf und werden z.B. in einem Wasserbad oder mit einem Luftgebläse abgekühlt, um vor Verklumpung geschützt zu werden.

Das Granulat wird z.B. über eine Rohrleitung abgesaugt und getrocknet und anschließend z.B. in sogenannten Big-Bags verpackt. Beispielsweise nach einer Zwischenlagerung von etwa 24 Stunden ist das Granulat fertig zur Weiterverarbeitung und zur Lagerung in z.B. 500 Liter Säcken oder zur losen Befüllung.

Das Extrudat und/oder das mit dem Treibmittel versehene Extrudat kann mit einem elektrisch leitenden Pulver, beispielsweise einem Metallpulver, vorzugsweise einem Aluminiumpulver zur Abschirmung von Erd-Wasser und/oder Elektrostrahlen versetzt werden. Das elektrisch leitenden Pulver kann insbesondere die Wärmeleitfähigkeit des Granulats verändern, wodurch sich die Dämmeigenschaften der Wärmedämmschüttung verbessern, sollte das Granulat als Werkstoff für die Dämmschüttung verwendet werden.

Das Kühlen der abgeschnittenen Stücke des mit dem Treibmittel versehenen Extrudats kann mittels einer Flüssigkeit erfolgen. Die Flüssigkeit ist vorzugsweise Wasser. Somit kann die Kühlvorrichtung der erfindungsgemäßen Vorrichtung als ein mit einer Flüssigkeit gefülltes Becken ausgeführt sein, bzw. eine auf einer Flüssigkeitskühlung bzw. Wasserkühlung basierende Kühlvorrichtung sein. Die Kühlvorrichtung kann z.B. auch auf einer Luftkühlung basieren.

Das Granulat kann mit einem Haftvermittler versehen werden. Der Haftvermittler weist vorzugsweise Zucker auf.

Um das Granulat relativ einfach mit dem zuckerhaltigen Haftvermittler zu versehen, kann vorzugsweise die Flüssigkeit des Beckens Zucker aufweisen oder Zuckerwasser sein.

Das Granulat umfasst die mehreren aufgeschäumten extrudierten Polystyrol-Partikel, die insbesondere kugelförmig ausgeführt sind. Wenigstens zwei der aufgeschäumten extrudierten Polystyrol-Partikel weisen unterschiedliche Größen bzw. unterschiedliche Durchmesser auf. Unter "kugelförmig" wird insbesondere nicht nur eine perfekte Kugelform, sondern u.a. auch eine Erbsenform, eine Ellipsenform, usw. verstanden. Die Durchmesser der aufgeschäumten extrudierten Polystyrol-Partikel sind vorzugsweise zwischen 2-8mm. Aufgrund der verschieden großen aufgeschäumten extrudierten Polystyrol-Partikel lässt sich bei der Verwendung derselben als Werkstoff für die Wärmedämmschüttung deren Druckfestigkeit, insbesondere deren Trittfestigkeit erhöhen.

Das Schüttgewicht des Granulats ist vorzugsweise zwischen 35-100 kg/m³.

Um unterschiedlich große aufgeschäumte extrudierte Polystyrol-Partikel des Granulats zu erhalten, werden unterschiedlich lange Stücke des durch die wenigstens eine Öffnung gepressten und mit dem Treibmittel versehenen Extrudats mittels der Schneidevorrichtung des Werkzeugs abgeschnitten, sodass sich die Größen der einzelnen Partikel des Granulats wesentlich unterscheiden.

Das Werkzeug ist demnach derart ausgebildet, dass es unterschiedlich lange Stücke des durch die wenigstens eine Öffnung gepressten und mit dem Treibmittel versehenen Extrudats abzuschneiden vermag, sodass sich die Größen der einzelnen aufgeschäumten extrudierten Polystyrol-Partikel des Granulats unterscheiden.

Gemäß einer bevorzugten Ausführungsform der erfindungsgemäßen Vorrichtung umfasst das Werkzeug bzw. der Granulierkopf mehrere, in einer Ebene und entlang des Umfangs eines Kreises angeordnete Öffnungen. Die Öffnungen sind vorzugsweise kreisförmig ausgebildet, und/oder sind jeweils gleich groß, und/oder sind von ihren jeweils benachbarten Öffnungen gleichweit beabstandet.

Die Schneidevorrichtung weist nach einer bevorzugten Ausführungsform der erfindungsgemäßen Vorrichtung mehrere Messer auf, die bezüglich einer rechtwinklig zur Ebene und durch den Mittelpunkt des Kreises verlaufenden Drehachse drehbar gelagert sind, und die derart relativ zu den Öffnungen ausgerichtet sind, dass sie bei einer Drehung um die Drehachse das durch die Öffnungen gepresste, mit dem Treibmittel versehene Extrudat abzuschneiden vermögen, und sich somit entlang des Umfangs des Kreises bewegen, und die Verbindungslinien zwischen dem Mittelpunkt des Kreises, entlang dessen Umfang die Messer sich bewegen, und zweier benachbarter Messer Kreissektoren bilden, wobei zumindest die Mittelpunktswinkel zweier dieser Kreissektoren unterschiedlich groß sind. Ein weiterer Aspekt der Erfindung ist somit ein entsprechend ausgebildeter Granulierkopf für einen Extruder, insbesondere für einen Einwellenextruder bzw. eine insbesondere als Einwellenextruder ausgebildeter Extruder mit einem solch ausgebildeten Granulierkopf.

Die Schneidevorrichtung kann vorzugsweise derart ausgebildet sein, dass die einzelnen Messer von ihren benachbarten Messern unregelmäßig beabstandet sind.

Ein Ausführungsbeispiel der Erfindung ist exemplarisch in der beigefügten schematischen Figuren dargestellt. Es zeigen:
- Fig. 1: eine Vorrichtung mit einem Extruder,
- Fig. 2: ein Flussdiagramm,
- Fig. 3: eine Draufsicht eines Granulierkopfes des Extruders, und
- Fig. 4: eine perspektivische Darstellung des Granulierkopfes.

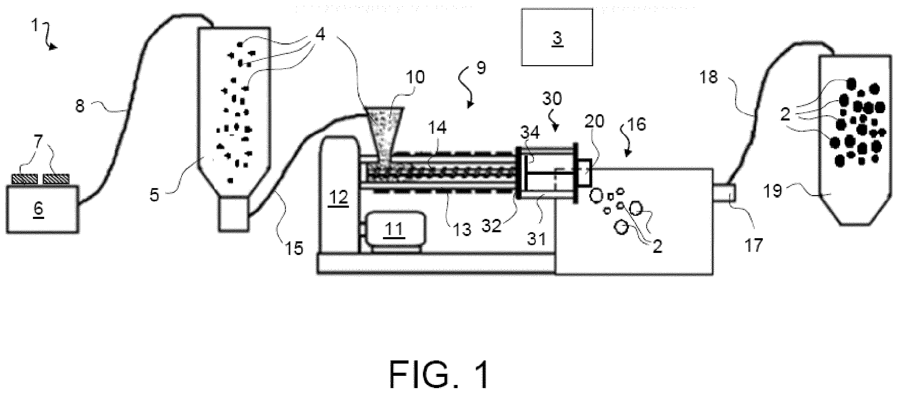

Die Fig. 1 zeigt eine Vorrichtung 1 zum Herstellen eines Granulats 2, das mehrere aufgeschäumte extrudierte Polystyrol-Partikel aufweist. Das Granulat 2 umfasst insbesondere mehrere, kugelförmig ausgeführte aufgeschäumte extrudierte Polystyrol-Partikel, von denen wenigstens zwei aufgeschäumte extrudierte Polystyrol-Partikel unterschiedliche Größe bzw. unterschiedliche Durchmesser aufweisen. Unter "kugelförmig" wird insbesondere nicht nur eine perfekte Kugelform, sondern u.a. auch eine Erbsenform, eine Ellipsenform, usw. verstanden. Die Durchmesser der aufgeschäumten extrudierten Polystyrol-Partikel sind vorzugsweise zwischen 2-8mm. Das Schüttgewicht des Granulats 2 ist vorzugsweise zwischen 35-100 kg/m³.

Im Falle des vorliegenden Ausführungsbeispiels ist das Granulat 2 als ein Werkstoff für eine Wärmedämmschüttung vorgesehen. Das Granulat 2 kann z.B. in dafür vorgesehene Säcke abgefüllt werden, um an dem Ort, an dem die Wärmedämmschüttung benötigt wird, zur Wärmedämmschüttung weiter verarbeitet zu werden. Für diese Weiterverarbeitung können z.B. aufgeschäumte extrudierten Polystyrol-Partikel des Granulats 2 mit einem mineralisierten bzw. mit einem mineralischen Bindemittel und Wasser gemischt werden, damit vorzugsweise eine Wärmedämmung gemäß einschlägiger gesetzlicher Richtlinien entsteht.

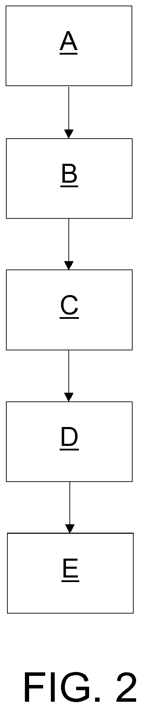

Im Falle des vorliegenden Ausführungsbeispiels umfasst die Vorrichtung 1 zum Herstellen des Granulats 2 eine elektronische Steuervorrichtung 3, welche eingerichtet ist, den Ablauf der Vorrichtung 1 zum Herstellen des Granulats 2 zu steuern, sodass mittels der Vorrichtung 1 zum Herstellen des Granulats 2 ein Verfahren zum Herstellen des Granulats 2 verwirklicht wird, das mittels eines in der Fig. 2 gezeigten Flussdiagramms zusammengefasst ist. Dazu läuft vorzugsweise auf der Steuervorrichtung 3 ein geeignetes Rechenprogramm.

Im Falle des vorliegenden Ausführungsbeispiels wird das Granulat 2 aus einem bereitgestellten zerkleinerten Polystyrol-Abfall 4 hergestellt, Schritt A des Flussdiagramms. Der zerkleinerte Polystyrol-Abfall 4 wird z.B. in einem ersten Vorratsbehälter 5 der Vorrichtung 1 zum Herstellen des Granulats 2 bereitgestellt.

Um den zerkleinerten Polystyrol-Abfall 4 zu erhalten, umfasst die Vorrichtung 1 zum Herstellen des Granulats 2 im Falle des vorliegenden Ausführungsbeispiels eine Zerkleinerungsvorrichtung 6, welche eingerichtet ist, insbesondere einen verpressten Polystyrol-Abfall 7 zu zerkleinern, um den zerkleinerten Polystyrol-Abfall 4 herzustellen. Die Zerkleinerungsvorrichtung 6 ist beispielsweise eine Fräse oder ein Schneidemesser und wird im Betrieb von der Steuervorrichtung 3 angesteuert.

Der verpresste Polystyrol-Abfall 7 kann sowohl expandiertes Polystyrol (EPS) als auch extrudiertes Polystyrol (XPS) umfassen. Der verpresste Polystyrol-Abfall 7 kann z.B. bei entsprechend eingerichteten Sammelstellen aus Polystyrol-Abfall durch Verpressen hergestellt werden, um an den Aufstellort der Vorrichtung 1 zum Herstellen des Granulats 2 z.B. mittels LKWs transportiert zu werden. Aufgrund des Verpressens wird weniger Platz beim Transportieren verbraucht. Wird z.B. der Polystyrol-Abfall unverpresst transportiert, dann werden z.B. 24 LKW Fahrten benötigt. Beim Transport des verpressten Polystyrol-Abfalls 7 können insbesondere 23 dieser 24 LKW Fahrten gespart werden.

Im Falle des vorliegenden Ausführungsbeispiels umfasst die Vorrichtung 1 zum Herstellen des Granulats 2 eine mittels der Steuervorrichtung 3 angesteuerte erste Transportvorrichtung 8, die z.B. eine Schneckenwelle umfasst und die vorgesehen ist, automatisch den zerkleinerten Polystyrol-Abfall 4 von der Zerkleinerungsvorrichtung 6 zum ersten Vorratsbehälter 5 zu transportieren.

Die Vorrichtung 1 zum Herstellen des Granulats 2 umfasst einen mittels der Steuervorrichtung 3 angesteuerten Extruder 9.

Der Extruder 9, der vorzugsweise als eine Einwellenextruder ausgeführt ist, umfasst im Falle des vorliegenden Ausführungsbeispiels eine Befüllungsvorrichtung 10 für den zerkleinerten Polystyrol-Abfall 4, einen mittels der Steuervorrichtung 3 angesteuerten Antrieb, der z.B. einen Elektromotor 11 und ein Getriebe 12 umfasst, einen insbesondere horizontal ausgerichteten Hohlzylinder 13, eine innerhalb des Hohlzylinders 1 drehbar gelagerte, mittels des Antriebs angetriebene Schneckenwelle 14, und ein Werkzeug, das insbesondere als ein Granulierkopf 30 ausgebildet ist.

Die Befüllungsvorrichtung 10, die z.B. trichterfömig ausgebildet ist, ist im Bereich eines der beiden Enden des Hohlzylinders 13 angeordnet und ist vorgesehen, den Hohlzylinder 10 mit dem zerkleinerten Polystyrol-Abfall 4 zu befüllen.

Damit der zerkleinerte Polystyrol-Abfall 4 von dem ersten Vorratsbehälter 5 zur Befüllungsvorrichtung 10 vorzugsweise automatisch gesteuert durch die Steuervorrichtung 3 transportiert werden kann, kann die Vorrichtung 1 zum Herstellen des Granulats 2 eine zweite Transportvorrichtung 15, die z.B. eine weitere Schneckenwelle umfasst, aufweisen.

Die Befüllungsvorrichtung 10 kann ein Sieb aufweisen, um zumindest teilweise Verunreinigungen aus dem zerkleinerten Polystyrol-Abfall 4 zu entfernen.

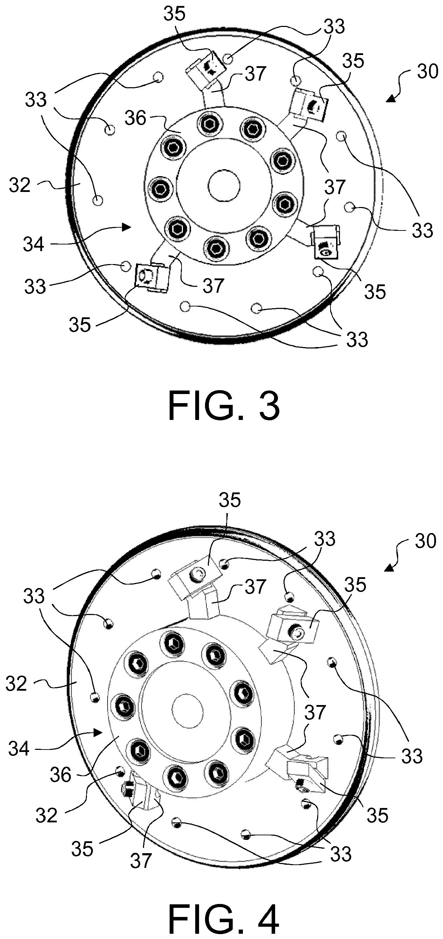

Der Granulierkopf 30 umfasst im Falle des vorliegenden Ausführungsbeispiels eine Lochplatte 32 mit wenigstens einer Öffnung 33 und eine Schneidevorrichtung 34. Die Lochplatte 32 und die Schneidevorrichtung 34 sind in den Figuren 3 und 4 näher gezeigt. Die wenigstens eine Öffnung 33 ist vorzugsweise kreisförmig ausgebildet.

Im Falle des vorliegenden Ausführungsbeispiels weist die Lochplatte 32 des Granulierkopf 30 mehrere Öffnungen 33 auf, die insbesondere entlang des Umfangs eines Kreises angeordnet sind, und/oder vorzugsweise kreisförmig ausgebildet sind, und/oder jeweils gleich groß sind, und/oder von ihren jeweils benachbarten Öffnungen gleichweit beabstandet sind.

Im Falle des vorliegenden Ausführungsbeispiels ist der Granulierkopf 30 mit seiner Lochplatte 32 an dem der Befüllungsvorrichtung 10 abgewandten Ende des Hohlzylinders 13 am Hohlzylinder 13 befestigt.

Die Schneidevorrichtung 34 ist vorzugsweise auf der dem Hohlzylinder 13 abgewandten Seite der Lochplatte 32 angeordnet. Im Falle des vorliegenden Ausführungsbeispiels umfasst der Granulierkopf 30 einen mittels der Steuervorrichtung 3 angesteuerten und mit der Schneidevorrichtung 34 gekoppelten Antrieb 20.

Im Falle des vorliegenden Ausführungsbeispiel umfasst der Granulierkopf 30 noch einen hohlzylinderförmigen Abschnitt 31, innerhalb dem die Schneidevorrichtung 34 angeordnet ist und die an der dem Hohlzylinder 13 des Extruders 9 abgewandten Seite der Lochplatte 32 befestigt ist.

Im Falle des vorliegenden Ausführungsbeispiels umfasst die Vorrichtung 1 zum Herstellen des Granulats 2 eine Kühlvorrichtung vorzugsweise in Form eines mit einer Flüssigkeit, vorzugsweise Wasser, gefüllten Beckens 16 mit einem Ausgang 17, in das das Werkzeug bzw. der Granulierkopf 30 zumindest teilweist eingetaucht ist, insbesondere mit seinem hohlzylinderförmigen Abschnitt 31. Der hohlzylinderförmige Abschnitt 31 umfasst nicht dargestellte Öffnungen, sodass die Flüssigkeit des Beckens 16 auch innerhalb des hohlzylinderförmigen Abschnitts 31 des Granulierkopfes 30 zu fließen vermag.

Bei einer mittels des Extruders 9 durchgeführten Extrusion wird der zerkleinerte Polystyrol-Abfall 4 im Wesentlichen mittels wenigstens einer nicht näher dargestellten und mittels der Steuervorrichtung 3 angesteuerten Heizvorrichtung und gegebenenfalls einer inneren Reibung innerhalb des Hohlzylinders 13 aufgeschmolzen, d.h. plastifiziert, wodurch ein nicht näher dargestelltes Extrudat entsteht, Schritt B des Flussdiagramms.

Dem Extrudat wird ein Treibmittel zugeführt, Schritt C des Flussdiagramms. Vorzugsweise umfasst das Treibmittel C0₂ bzw. besteht im Wesentlichen aus C0₂. Das Treibmittel kann aber z.B. auch Kohlensäure aufweisen bzw. zumindest größtenteils aus Kohlensäure bestehen. Auch ein pulverförmiges Treibmittel kann vorgesehen sein.

Im Falle des vorliegenden Ausführungsbeispiels kann es noch vorgesehen sein, dass das Extrudat bzw. das mit dem Treibmittel versehene Extrudat mit einem elektrisch leitenden Pulver, z.B. einem Metallpulver, vorzugsweise mit einem Aluminiumpulver, versetzt wird.

Im Betrieb des Extruders 9 wird innerhalb des Hohlzylinders 13 ein Druck aufgebaut, sodass die sich drehende Schneckenwelle 14 das mit dem Treibmittel versehene Extrudat durch die Öffnungen 33 der Lochplatte 32 des Granulierkopfes 30 presst, Schritt D des Flussdiagramms.

Die Schneidevorrichtung 34 ist vorgesehen, das durch die Öffnungen 33 gepresste, mit dem Treibmittel versehene Extrudat in insbesondere zylinderförmige Stücke zu schneiden. Diese Stücke des mit dem Treibmittel versehenen Extrudats schäumen aufgrund des Treibmittels auf und werden mittels der Flüssigkeit gekühlt, sodass die mehreren aufgeschäumten extrudierten Polystyrol-Partikel des Granulats 2 entstehen, Schritt E des Flussdiagramms. Die aufgeschäumten extrudierten Polystyrol-Partikel des Granulats 2 werden automatisch von dem hohlzylinderförmigen Abschnitt 31 des Granulierkopfes 2 in das Becken 16 gespült.

Das durch die Öffnungen 33 gepresste, mit dem Treibmittel versehene und in Stücke geschnittene Extrudat gelangt somit unmittelbar in die Flüssigkeit des Beckens 16.

Anstelle des Beckens 16, also eine auf einer Wasserkühlung basierenden Kühlvorrichtung, kann auch eine andere Kühlvorrichtung vorgesehen sein, die z.B. auf einer Luftkühlung basiert.

Das Granulat 2 kann dann aus dem Becken 16 über dessen Ausgang 17 abgesaugt werden, um beispielsweise anschließend z.B. über eine Absaugleitung bzw. Luftgebläseleitung 18 in einen zweiten Vorratsbehälter 19 für eine Lagerung transportiert zu werden.

Im Falle des vorliegenden Ausführungsbeispiels ist das Granulat 2 als ein Werkstoff für eine Wärmedämmschüttung vorgesehen. Das Granulat 2 kann z.B. in dafür vorgesehene Säcke, sogenannte Big-Bags, abgefüllt werden, um an dem Ort, an dem die Wärmedämmschüttung benötigt wird, zur Wärmedämmschüttung weiter verarbeitet zu werden. Für diese Weiterverarbeitung kann z.B. das Granulat 2 mit einem mineralisierten bzw. mit einem mineralischen Bindemittel und Wasser gemischt werden, damit mittels der Wärmedämmschüttung vorzugsweise eine Wärmedämmung gemäß einschlägiger gesetzlicher Richtlinien entsteht.

Es kann auch vorgesehen sein, dass die aufgeschäumten extrudierten Polystyrol-Partikel des Granulats 2 mit einem Haftvermittler versehen werden bzw. sind. Der Haftvermittler umfasst z.B. Zucker bzw. ist zuckerhaltig. Um die aufgeschäumten extrudierten Polystyrol-Partikel des Granulats 2 mit dem zuckerhaltigen Haftvermittler zu versehen, wird vorzugsweise für das Becken 16 eine zuckerhaltige Flüssigkeit, vorzugsweise Zuckerwasser verwendet.

Im Falle des vorliegenden Ausführungsbeispiels ist es vorzugsweise vorgesehen, dass wenigstens zwei der aufgeschäumten extrudierten Polystyrol-Partikel des Granulats unterschiedliche Größen bzw. unterschiedliche Volumen bzw. unterschiedliche Durchmesser aufweisen. Dies wird vorzugsweise dadurch erreicht, indem der Granulierkopf 30 derart ausgebildet ist, dass dessen Schneidevorrichtung 34 das durch die wenigstens eine Öffnung 33 durchgepresste, mit dem Treibmittel versehene Extrudat verschieden lang abschneidet.

Im Falle des vorliegenden Ausführungsbeispiels weist die Schneidevorrichtung 34 des Granulierkopfes 30 mehrere Messer 35 und einen drehbar gelagerten Kranz 36 mit mehreren, sich radial erstreckenden Armen 37 auf, an denen jeweils eines der Messer 35 befestigt ist.

Der Kranz 36 ist bezüglich einer nicht näher gezeigten Drehachse drehbar gelagert. Die Drehachse verläuft rechtwinklig zu der von der Lochplatte 32 aufgespannten Ebene und durch den Mittelpunkt des Kreises, entlang dessen Umfang die Öffnungen 33 der Lochplatte 32 angeordnet sind.

Vorzugsweise ist die Schneidevorrichtung 34 an der dem Hohlzylinder 13 abgewandten Seite der Lochplatte 32 drehbar gelagert.

Der Kranz 36 wird im Betrieb des Extruders 9 mittels des Antriebs 20 gesteuert durch die Steuervorrichtung 3 vorzugsweise mit konstanter Drehzahl gedreht. Die durchschnittliche Größe und das Gewicht des Granulats 2 kann mit schnellerer oder langsamer Drehzahl des Antriebs 20 eingestellt werden. Ist diese Drehzahl eingestellt, dann wird der Antrieb 20 vorzugsweise mit konstanter Drehzahl betrieben.

Die Schneidevorrichtung 34 ist im Falle des vorliegenden Ausführungsbeispiels derart ausgebildet, dass die Messer 35 bei sich drehendem Kranz 36 über die Öffnungen 33 streichen, um dadurch das aus den Öffnungen 33 gepresste, mit dem Treibmittel versehene Extrudat abzuschneiden.

Während der Drehung des Kranzes 36 bewegen sich somit die Messer 35 auf einer Kreisbahn, deren Durchmesser dem Kreis entspricht, entlang dessen Umfang die Öffnungen 33 angeordnet sind.

Die Schneidevorrichtung 34 ist insbesondere derart ausgebildet, dass die Verbindungslinien zwischen dem Mittelpunkt des Kreises, entlang dessen Umfang die Messer sich bewegen, und zweier benachbarter Messer Kreissektoren bilden, wobei zumindest die Mittelpunktswinkel zweier dieser Kreissektoren unterschiedlich groß sind.

Die Scheidevorrichtung 34 ist im Falle des vorliegenden Ausführungsbeispiels vorzugsweise derart ausgebildet, dass die einzelnen Messer 35 von ihren benachbarten Messern unregelmäßig beabstandet sind.

Aufgrund dieser Ausführung der Schneidevorrichtung 34 wird das mit dem Treibmittel versehene Extrudat unterschiedlich lang durch die Öffnungen 33 des Granulierkopfes 30 gepresst, bis sie von einem der Messer 35 abgeschnitten werden. Dadurch entstehen unterschiedlich große aufgeschäumte extrudierte Polystyrol-Partikel.

## Patentansprüche

1. Verfahren zum Herstellen eines als Werkstoff für eine Wärmedämmschüttung vorgesehenen Polystyrol-Granulats, aufweisend folgende Verfahrensschritte:
- Bereitstellen von zerkleinertem Polystyrol-Abfall (4), der sowohl expandiertes Polystyrol als auch extrudiertes Polystyrol aufweist,
- Herstellen eines Extrudats aus dem zerkleinerten Polystyrol-Abfall (4) mittels eines Extruders (9),
- Herstellen eines mit einem Treibmittel versehenen Extrudats aus dem Extrudat mittels des Extruders (9),
- Pressen des mit dem Treibmittel versehenen Extrudats durch wenigstens eine Öffnung (33) eines Werkzeugs (30) des Extruders (9),
- Abschneiden von unterschiedlich langen Stücken des durch die wenigstens eine Öffnung (33) gepressten und mit dem Treibmittel versehenen Extrudats mittels einer Schneidevorrichtung (34) des Werkzeugs (30), sodass sich die Größen wenigstens zweier der mehreren aufgeschäumten extrudierten Polystyrol-Partikel des Granulats (2) wesentlich unterscheiden, und
- Aufschäumenlassen und mittels einer Kühlvorrichtung (16) Kühlen der abgeschnittenen Stücke des mit dem Treibmittel versehenen Extrudats aufgrund des Treibmittels, um ein als Werkstoff für eine Wärmedämmschüttung vorgesehenes Granulat (2) zu erhalten, das die mehreren aufgeschäumten extrudierten Polystyrol-Partikel aufweist.

2. Verfahren nach Anspruch 1, aufweisend Zerkleinern von verpresstem Polystyrol-Abfall (7), um den zerkleinerten Polystyrol-Abfall (4) zu erhalten.

3. Verfahren nach Anspruch 2, aufweisend Zerkleinern des verpressten Polystyrol-Abfalls (7) mittels einer Zerkleinerungsvorrichtung (6), um den zerkleinerten Polystyrol-Abfall (4) zu erhalten.

4. Verfahren nach einem der Ansprüche 1 bis 3, aufweisend Versehen des Extrudats und/oder des mit dem Treibmittel versehenen Extrudats mit einem elektrisch leitenden Pulver.

5. Verfahren nach einem der Ansprüche 1 bis 4, aufweisend Kühlen der abgeschnittenen Stücke des mit dem Treibmittel versehen Extrudats mittels einer Flüssigkeit, und/oder Versehen der mehreren aufgeschäumten extrudierten Polystyrol-Partikel des Granulats (2) mit einem Haftvermittler.

6. Verfahren nach Anspruch 5, bei dem die Flüssigkeit Zucker aufweist oder Zuckerwasser ist, um die mehreren aufgeschäumten extrudierten Polystyrol-Partikel des Granulats (2) mit einem zuckerhaltigen Haftvermittler zu versehen.

7. Verfahren nach einem der Ansprüche 1 bis 6, bei dem das Treibmittel C0₂ und/oder Kohlensäure aufweist oder aus C0₂ besteht oder aus Kohlensäure besteht.

8. Verfahren nach einem der Ansprüche 1 bis 7, aufweisend:
Mischen aufgeschäumter extrudierter Polystyrol-Partikel des Granulats (2) mit einem mineralisierten oder mit einem mineralischen Bindemittel und mit Wasser, um die Wärmedämmschüttung zu erhalten.

9. Verfahren nach einem der Ansprüche 1 bis 8, wobei die Durchmesser der aufgeschäumten extrudierten Polystyrol-Partikel zwischen 2-8mm sind und das Schüttgewicht des Granulats zwischen 35-100 kg/m³ ist.

10. Vorrichtung zum Herstellen eines als Werkstoff für eine Wärmedämmschüttung vorgesehenen Granulats (2), das mehrere aufgeschäumte extrudierte Polystyrol-Partikel aufweist, aufweisend
- einen Extruder (9) mit einem Werkzeug (30), das eine Schneidevorrichtung (34) und wenigstens eine Öffnung (33) aufweist, durch die der Extruder (9) ein hergestelltes und mit einem Treibmittel versehenes Extrudat zu pressen vermag, wobei die Schneidevorrichtung (34) eingerichtet ist, Stücke des durch die wenigstens eine Öffnung (33) gepressten und mit dem Treibmittel versehenen Extrudats abzuschneiden, und das Werkzeug (30) derart ausgebildet ist, dass es unterschiedlich lange Stücke des durch die wenigstens einen Öffnung (33) gepressten und mit dem Treibmittel versehenen Extrudats abzuschneiden vermag, sodass sich die Größen wenigstens zweier der mehreren aufgeschäumten extrudierten Polystyrol-Partikel des Granulats (2) wesentlich unterscheiden,
- eine dem Extruder (9) nachfolgende Kühlvorrichtung (16), und
- und eine den Extruder (9) ansteuernde elektronische Steuervorrichtung (3), die eingerichtet ist, das Verfahren nach einem der Ansprüche 1 bis 9 durchzuführen.

11. Vorrichtung nach Anspruch 10, bei der die Kühlvorrichtung auf einer Flüssigkeit basiert.

12. Vorrichtung nach Anspruch 11, bei der die Flüssigkeit Zucker aufweist oder Zuckerwasser ist.

13. Vorrichtung nach einem der Ansprüche 10 bis 12, wobei das Werkzeug (30) mehrere, in einer Ebene und entlang des Umfangs eines Kreises angeordnete Öffnungen (33) aufweist, und die Schneidevorrichtung (34) mehrere Messer (35) aufweist, die bezüglich einer rechtwinklig zur Ebene und durch den Mittelpunkt des Kreises verlaufende Drehachse drehbar gelagert sind, die derart relativ zu den Öffnungen (33) ausgerichtet sind, dass sie bei einer Drehung um die Drehachse das durch die Öffnungen (33) gepresste, mit dem Treibmittel versehene Extrudat abzuschneiden vermögen, und sich somit entlang des Umfangs des Kreises bewegen, und die Verbindungslinien zwischen dem Mittelpunkt des Kreises, entlang dessen Umfang die Messer (35) sich bewegen, und zweier benachbarter Messer (35) Kreissektoren bilden, wobei zumindest die Mittelpunktswinkel zweier dieser Kreissektoren unterschiedlich groß sind.

## Claims

1. Method for producing a polystyrene granulate intended as a material for a thermal insulation bulk good, comprising the steps of:
- Providing shredded polystyrene waste (4) which comprises expanded polystyrene as well as extruded polystyrene,
- producing an extrudate using the shredded polystyrene waste (4) by means of an extruder (9),
- producing an extrudate provided with a blowing agent from the extrudate by means of an extruder (9),
- pressing the extrudate provided with the blowing agent though at least one aperture (33) of a tool (30) of the extruder (9),
- cutting off parts having varying lengths of the extrudate provided with the blowing agent and pressed through the at least one aperture (33) by means of a cutting device (34) of the tool (30), such that at least two of the several foamed extruded polystyrene-particles vary significantly in size, and
- allowing to foam and by means of a cooling device (16) cooling the cut off parts of the extrudats provided with the blowing agent due to the blowing agent, in order to obtain a polystyrene granulate (2) intended as a material for a thermal insulation bulk good which comprises the several foamed extruded polystyrene-particles.

2. Method of claim 2, comprising shredding pressed together polystyrene waste (7) in order to obtain the shredded polystyrene waste (4).

3. Method of claim 2, comprising shredding the pressed together polystyrene waste (7) by means of a shredding device (6) in order to obtain the shredded polystyrene waste (4).

4. Method of any of claims 1 to 3, comprising providing the extrudate and/or the extrudate provided with the blowing agent with an electric conducting powder.

5. Method of any of claims 1 to 4, comprising cooling the cut off parts of the extrudate provided with the blowing agent by means of a liquid, and/or providing the several foamed extruded polystyrene-particles of the granulate (2) with a bonding agent.

6. Method of claim 5, wherein the liquid comprises sugar or is a sugar water, in order to provide the several foamed extruded polystyrene-particles of the granulate (2) with a bonding agent comprised of sugar.

7. Method of any of claims 1 to 6, wherein the blowing agent comprises C0₂ and/or carbonic acid or consists of C0₂ or consists of carbonic acid.

8. Method of any of claims 1 to 7, comprising mixing of foamed extruded polystyrene-particles of the granulate (2) with a mineraliced binder or with a mineral-based binder and water, in order to obtain the thermal insulation bulk good.

9. Method of any of claims 1 to 8, wherein the diameters of the foamed extruded polystyrene-particles vary between 2-8mm and wherein the bulk weight of the granulate is between 35 and 100 kg/m³.

10. Device for producing a polystyrene granulate intended as a material for a thermal insulation bulk good comprised several foamed extruded polystyrene-particles, comprising
- an extruder (9) comprising a tool (30) which comprises a cutting device (34) and at least one aperture (34) through which the extruder (9) is able to press an extrudate provided with a blowing agent, wherein the cutting device (34) is configured to cut off parts of the extrudate provided with the blowing agent and pressed through the at least one aperture (33), and wherein the tool (30) is configured to cut off parts having varying lengths of the extrudate provided with the blowing agent and pressed through the at least one aperture (33), such that at least two of the several foamed extruded polystyrene-particles vary significantly in size,
- a cooling device (16) following the extruder (9), and
- a control device (3) for controlling the extruder (9), the control device (3) being configured to perform the method of any of claims 1 to 9.

11. Device of claim 10, wherein the cooling device is based on a liquid.

12. Device of claim 11, wherein the liquid comprises sugar or is a sugar water.

13. Device of any of claims 10 to 12, wherein the tool (30) comprises a plurality of apertures (33) arranged in a plane and along the circumference of a circle, and the cutting device (34) comprises a plurality of knives (35) which are at right angles to the plane and through the center of the circle are rotatably mounted, which knives (35) are aligned relative to the apertures (33) that they are able, while rotating about the axis of rotation, to cut the extrudate provided with the blowing agent and pressed through the apertures (33), and, thus, the knives (35) move along the circumference of the circle, and the connecting lines between the center of the circle, along the circumference the knifes (35) move, and two adjacent knives (35) form circular sectors, wherein at least the midpoint angles of two of these circular sectors differ in size.

## Revendications

1. Procédé de fabrication d'un granulé de polystyrène destiné à servir de matériau pour un remblai calorifuge, comprenant les étapes de procédé suivantes:
- fournir des déchets de polystyrène broyés (4) qui présentent à la fois du polystyrène expansé et du polystyrène extrudé,
- fabriquer d'un extrudat à partir des déchets de polystyrène broyés (4) au moyen d'une extrudeuse (9),
- fabriquer un extrudat pourvu d'un agent gonflant à partir de l'extrudat au moyen de l'extrudeuse (9),
- presser l'extrudat pourvu de l'agent gonflant à travers au moins un orifice (33) d'un outil (30) de l'extrudeuse (9),
- découper des morceaux de différentes longueurs de l'extrudat pressé à travers ladite au moins un orifice (33) et pourvu de l'agent gonflant au moyen d'un dispositif de coupe (34) de l'outil (30) de telle sorte que les tailles d'au moins deux de la pluralité des particules de polystyrène extrudé et expansé du granulé (2) sont sensiblement différentes, et
- faire expanser et refroidir, au moyen d'un dispositif de refroidissement (16), des morceaux découpés de l'extrudat pourvu de l'agent gonflant, en raison de l'agent gonflant, pour obtenir un granulé (2) prévu en tant que matériau pour un remblai calorifuge comprenant la pluralité de particules de polystyrène extrudé et expansé.

2. Procédé selon la revendication 1, présentant l'étape de broyer des déchets de polystyrène (7) pressés pour obtenir les déchets de polystyrène broyé (4).

3. Procédé selon la revendication 2, présentant l'étape de broyer des déchets de polystyrène (7) pressés au moyen d'un dispositif de broyage (6) pour obtenir les déchets de polystyrène broyés (4).

4. Procédé selon l'une quelconque des revendications 1 à 3, présentant l'étape de fournir une poudre électriquement conductrice à l'extrudat et/ou à l'extrudat pourvu de l'agent gonflant.

5. Procédé selon l'une quelconque des revendications 1 à 4, présentant l'étape de faire refroidir des morceaux découpés de l'extrudat pourvu de l'agent gonflant au moyen d'un liquide, et/ou l'étape de pouvoir d'un agent d'adhérence la pluralité de particules de polystyrène extrudé et expansé du granulé (2).

6. Procédé selon la revendication 5, dans lequel le liquide comprend du sucre ou est de l'eau sucrée, pour pourvoir d'un agent d'adhérence contenant du sucre la pluralité de particules extrudées de polystyrène extrudé et expansé du granulé (2).

7. Procédé selon l'une quelconque des revendications 1 à 6, dans lequel l'agent gonflant comprend du C0₂ et/ou de l'acide carbonique ou est composé de C0₂ ou est composé d'acide carbonique.

8. Procédé selon l'une quelconque des revendications 1 à 7, présentant l'étape de mélanger des particules de polystyrène extrudé et expansé du granulé (2) avec un liant minéralisé ou minéral et avec de l'eau pour obtenir le matériau pour un remblai calorifuge.

9. Procédé selon l'une quelconque des revendications 1 à 8, **caractérisé en ce que** les diamètres des particules de extrudées et expansées du polystyrène sont compris entre 2 et 8 mm et la densité apparente du granulé est comprise entre 35 et 100 kg/m³.

10. Dispositif pour la fabrication d'un granulé (2) prévu en tant que matériau pour un remblai calorifuge, ledit granulé présentant une pluralité de particules extrudées et expansées de polystyrène, présentant
- une extrudeuse (9) comprenant un outil (30) qui présente un dispositif de coupe (34) et au moins un orifice (33) à travers lequel l'extrudeuse (9) permet de presser un extrudat fabriqué et pourvu d'un agent gonflant, le dispositif de coupe (34) étant configuré pour découper des morceaux de l'extrudat pressé à travers ledit au moins un orifice (33) et pourvu de l'agent gonflant, et l'outil (30) étant réalisé de telle sorte qu'il permet de découper des morceaux de l'extrudat de différentes longueurs, pressé à travers ledit au moins un orifice (33) et pourvu de l'agent gonflant de telle sorte que les tailles d'au moins deux de la pluralité des particules extrudées et expansées de polystyrène du granulé (2) sont sensiblement différentes,
- un dispositif de refroidissement (16) suivant l'extrudeuse (9), et
- un dispositif de commande électronique (3) pilotant l'extrudeuse (9), qui est configuré pour mettre en œuvre le procédé selon l'une quelconque des revendications 1 à 9.

11. Dispositif selon la revendication 10 dans lequel le dispositif de refroidissement est basé sur un liquide.

12. Dispositif selon la revendication 11, dans lequel le liquide comprend du sucre ou est de l'eau sucrée.

13. Dispositif selon l'une quelconque des revendications 10 à 12, dans lequel l'outil (30) présente une pluralité d'orifices (33) agencés dans un plan et le long de la circonférence d'un cercle, et le dispositif de coupe (34) présentant une pluralité de lames (35) qui sont montées rotatives par rapport à un axe de rotation perpendiculaire au plan et traversant le centre du cercle, qui sont orientées de telle sorte par rapport aux orifices (33) que, lors d'une rotation autour de l'axe de rotation, elles permettent de découper l'extrudat pressé à travers les orifices (33) et pourvu de l'agent gonflant, et elles se déplacent ainsi le long de la circonférence du cercle, et les lignes de liaison entre le centre du cercle sur la circonférence duquel les lames (35) se déplacent et deux lames adjacentes (35) forment des secteurs circulaires, au moins les angles au centre de deux de ces secteurs circulaires étant de dimensions différentes.
